# EUROPÄISCHE PATENTSCHRIFT

(11) **EP 3 294 534 B1**
(45) Veröffentlichungstag und Bekanntmachung des Hinweises auf die Patenterteilung: **29.01.2020**
(21) Anmeldenummer: 16728830.7
(22) Anmeldetag: 17.05.2016
(51) Int. Cl.: B29C 70/44, B29C 43/36, B29C 33/56, B29C 33/40

(54) **EINE EVAKUIERBARE FORM FÜR FASERVERBUNDKUNSTSTOFF-BAUTEILE**
EVACUABLE FORM FOR FIBRECOMPOSITE PLASTIC PARTS
UN MOULE ÉVACUABLE POUR LES PIÈCES COMPOSITES EN PLASTIQUE RENFORCÉES PAR DES FIBRES

(30) Priorität: 15.05.2015 DE 102015208980
(43) Veröffentlichungstag der Anmeldung: 21.03.2018
(73) Patentinhaber: Infiana Germany GmbH & Co. KG, 91301 Forchheim (DE)
(72) Erfinder: GRIMM, Felix, 91052 Erlangen (DE)
(74) Vertreter: Kutzenberger Wolff & Partner
(86) Internationale Anmeldenummer: PCT/EP2016/000810
(87) Internationale Veröffentlichungsnummer: WO 2016/184564

(56) Entgegenhaltungen:
- EP-A2- 0 887 369
- WO-A1-2014/124945
- WO-A1-2015/067440
- JP-B2- 5 110 440
- US-A1- 2013 101 815
- US-B1- 6 440 566
- Kopplung Von Ptfe ET AL: "ELASTOMERE UND KUNSTSTOFFE ELASTOMERS AND PLASTICS Coupling Between PTFE and Rubber - A New Elastomeric Material", , 31. Dezember 2005 (2005-12-31), XP055292738, Gefunden im Internet: URL:http://www.neue-verpackung.de/ai/resou rces/5019a3ae065.pdf [gefunden am 2016-08-02]
- Anonymous: "Convenient Truths about Gas Plasma Technology | MDDI Medical Device and Diagnostic Industry News Products and Suppliers", , 1. Februar 2009 (2009-02-01), XP055292774, Gefunden im Internet: URL:http://www.mddionline.com/article/conv enient-truths-about-gas-plasma-technology [gefunden am 2016-08-02]

## Beschreibung

Die vorliegende Erfindung betrifft eine evakuierbare, stabile Form mit einer durch Thermoverformung dem jeweils damit herzustellenden Faserverbundkunststoff-Bauteil entsprechenden Gestaltung aus einem thermoplastischen, vakuumdichten Kunststofffilm aus einer Schicht a) als Oberflächenschicht aus wenigstens einem thermoplastischen Polyamid oder Copolyamid mit gegebenenfalls funktionellen Gruppen und einer Schicht b) als Trennschicht auf der Innenseite der Form aus wenigstens einem thermoplastischen Tetrafluorethylencopolymeren, das funktionelle Gruppen aufweist. Eine derartige Form, die einen zweischichtigen Aufbau aufweist, ist aus der WO2015067440 bekannt.

Es ist bekannt, dass mit Hilfe sogenannter Vakuumaufbauten (vacuum bagging) selbst kompliziert gestaltete Faserverbundkunststoff-Bauteile für unterschiedlichste Anwendungen, wie z.B. für die Luftfahrt, die Raumfahrt, Fahrzeug- oder Windenergie-Industrie, hergestellt werden können. Dabei werden Laminate aus Verstärkungsfasern, vorzugsweise Carbon- oder Glasfasern, getränkt mit einem auszuhärtenden Kunststoffharz zusammen mit einem formgebenden, vakuumdichten Werkzeug in eine vakuumdichte Hülle gepackt. Durch Evakuierung wird das Laminat in das formgebende vakuumdichte Werkzeug nicht nur gepresst, sondern darin auch ausreichend verdichtet, so dass das Laminat möglichst keine Hohlräume aufweist und Gas- oder Lufteinschlüsse entweichen können. Die evakuierbare Gesamtvorrichtung umfassend eine Verpackungshülle und ein formgebendes Werkzeug mit dem verformten, faserhaltigen Kunstofflaminat wird anschließend in einem Autoklaven unter Druck und Erhitzen bis auf die Aushärtungstemperatur des Kunststoffharzes solange belassen, bis das auszuhärtende Kunststoffharz ausgehärtet ist und das fertige Faserverbundkunststoff-Bauteil der Vorrichtung entnommen werden kann.

Die vakuumdichte Verpackungshülle des zu formenden und auszuhärtenden FaserKunststoffharz-Laminats umfasst üblicherweise nicht nur als außenliegende Verpackungshülle einen vakuumdichten Kunststofffilm, sondern auch, neben dem mit einer Trennschicht ausgerüsteten, formgebende Formwerkzeug, einen an den vakuumdichten Kunststofffilm von außen nach innen angeordneten Schichtaufbau aus einer Schicht aus einem luftdurchlässigen Vlies, aus einer Release-Schicht, ggf. aus einer daran angrenzenden Schicht zur Absorption des überflüssigen, aus dem Faserkunststoffharz-Laminat durch das Vakuum herausgepressten Kunststoffharz und aus einer weiteren, vorzugsweise perforierten, Release-Schicht, die direkt an das auszuhärtende Laminat angrenzt. Daher ist dieses Verfahren zur Herstellung von Faserverbundkunststoff-Bauteilen nicht nur relativ kompliziert, sondern auch wegen des aufgeführten Material- und Arbeitsaufwandes zeit- und kostenintensiv.

Es besteht daher ein Bedarf, die aufgeführte Vakuum-Verpackungs-Technologie zu vereinfachen, ohne dass die hergestellten Faserverbundkunststoff-Bauteile Qualitätseinbußen aufweisen.

Aufgabe der vorliegenden Erfindung war es daher, die Vakuum-Verpackungs-Technologie zur Herstellung von Faserverbundkunststoff-Bauteilen so weit wie möglich zu vereinfachen und dadurch die Kosten zu reduzieren, ohne dass die höchsten Sicherheits-Ansprüchen genügende Qualität der Faserverbundkunststoff-Bauteile irgendeiner Weise beeinträchtigt wird.

Diese Aufgabe wird durch den Einsatz einer evakuierbaren, stabilen Form mit einer durch Thermoverformung dem jeweils damit herzustellenden Faserverbundkunststoff-Bauteil entsprechenden Gestaltung aus einem wenigstens zweischichtigen, thermoplastischen, vakuumdichten Kunststofffilm aus
a) einer Oberflächenschicht aus wenigstens einem thermoplastischen Polyamid oder Copolyamid, das ggf. funktionelle Gruppen aufweist und
b) einer die Innenseite der Form bildenden Trennschicht aus wenigstens einem thermoplastischen
   Tetrafluorethylencopolymeren, das funktionelle Gruppen aufweist,
   wobei der Kunststofffilm keine Haftvermittlerschicht zwischen der Schicht a) und der Schicht b) aufweist, **und mit dem in Anspruch 1 definierten Aufbau gelöst.**

Aus dem erfindungsgemäß zum Einsatz kommenden thermoplastischen, vakuumdichten Kunststofffilm können evakuierbare, stabile Formen durch Thermoverformung hergestellt werden, deren Gestaltung jeweils passgenau dem herzustellenden Faserverbundkunststoff-Bauteil entspricht. Darüber hinaus kann auf den vorstehend genannten, weiteren Schichtaufbau aus zusätzlichen Releaseschichten, Kunststoffharz-Absorptions-Schichten und luftdurchlässigen Vliesschichten verzichtet werden, der üblicherweise bei der Vakuum-Verpackungs-Technologie zur Herstellung von Faserverbundkunststoff-Bauteilen notwendig ist. Die erfindungsgemäße Form weist die notwendige Vakuumdichtigkeit für die notwendige Evakuierung zur Verdichtung des in der Verpackung angeordneten Laminats aus Fasern und aushärtbaren Kunststoffharz zu dessen formgetreuen Gestaltung von selbst kompliziert gestalteten Faserverbundkunststoff-Bauteilen auf.

Darüber hinaus bleibt die Form während des unter Druck und erhöhter Temperatur über mehrere Stunden stattfindenden Aushärtungsprozesses des FaserKunststoffharz-Laminates zum fertigen Bauteil ausreichend stabil und kann ohne Schwierigkeiten von dem nach der Aushärtung des Kunststoffharzes erhaltenen Faserverbundkunststoff-Bauteils entfernt werden. Dies gelingt u.a. deshalb so reibungslos, weil der zur Herstellung der evakuierten, stabilen Form verwendete Kunststofffilm eine ausgezeichnete Verbundhaftung zwischen der Schicht a) und der Schicht b) aufweist, ohne dass eine Haftvermittlerschicht zwischen der Schicht a) und der Trennschicht b) notwendig ist. Die Verbundhaftung wird auch während der lang anhaltenden Aushärtung des Faser-Kunststoff-Laminats nicht beeinträchtigt. Dementsprechend weist die Oberflächenstruktur des ausgehärteten Faserverbundkunststoff-Bauteils keine Beschädigungen auf und genügt den hohen optischen bzw. sicherheitsrelevanten Ansprüchen.

Da außerdem der erfindungsgemäß zum Einsatz kommende Kunststofffilm eine Erweichungstemperatur ≤ 240 °C aufweist, ist eine Thermoverformung zur Herstellung der erfindungsgemäßen, evakuierbaren Form selbst bei einer komplizierten Gestaltung des mit der Form herzustellenden Faserverbundkunststoff-Bauteils auf üblichen Thermoverform-Anlagen, z.B. durch Tiefziehen, vorzugsweise unter Vakuum und/oder mechanischer Einwirkung, möglich.

Der erfindungsgemäß zum Einsatz kommende, thermoplastische, wenigstens zweischichtige Kunststofffilm ist vakuumdicht, wobei die Vakuumdichtigkeit sowohl durch die Polyamidschicht a) als auch Trennschicht b) gegeben ist. Dementsprechend ist die erfindungsgemäße Form auch dauerhaft evakuierbar bzw. kann dauerhaft vakuumdicht eingestellt werden.

Da der zum Einsatz kommende, thermoplastische Kunststofffilm eine um mindestens 10 °C höhere Erweichungstemperatur hat als die Aushärtungstemperatur des faserverstärkten, auszuhärtenden Kunststofflaminats, aus dem das Faserverbundkunststoff-Bauteil hergestellt wird, bleibt die erfindungsgemäße Form während der Aushärtungsphase auch stabil und behält ihre Form. Die ausreichende Stabilität der erfindungsgemäßen Form wird darüber hinaus dadurch gewährleistet, dass der zur Herstellung der erfindungsgemäßen Form zum Einsatz kommende Kunststoffilm einen ausgezeichneten Elastizitätsmodul aufweist.

Der erfindungsgemäß zum Einsatz kommende Kunststofffilm ist vorzugsweise zweischichtig und weist vorzugsweise eine so hohe Verbundhaftung auf, dass die Schichten unter den für die Bestimmung der Verbundhaftung angegebenen üblichen Messbedingungen nicht zu trennen ist, so dass, wie bereits ausgeführt, eine Delaminierung der Schicht a) von der Schicht b) des erfindungsgemäß zum Einsatz kommenden Kunststofffilms unter Stressbedingungen verhindert wird. Eine separate Haftvermittlerschicht zwischen der Schicht a) und der Schicht b) ist überflüssig und daher nicht vorhanden.

Bei dem erfindungsgemäß zum Einsatz kommenden Kunststofffilm, der keine Haftvermittlerschicht zwischen der Schicht a) und der Schicht b) aufweist, wird diese Verbundhaftung dadurch erreicht, dass das zur Herstellung der Schicht b) verwendete, thermoplastische Tetrafluorethylencopolymere funktionelle Gruppen wie auch ggf. das Polyamid oder Copolyamid der Schicht a) aufweisen, wobei vorzugsweise die funktionellen Gruppen der beiden Schichten miteinander reagieren können und sollen.

Dementsprechend kann die Schicht a) auf wenigstens einem thermoplastischen, aliphatischen, teilaromatischen oder aromatischen Polyamid oder Copolyamid oder einer Mischung aus wenigstens zwei der genannten Polymere basieren, wobei ggf. das Polyamid oder das Copolyamid aus mindestens einem zumindest trifunktionellen Polyamin oder einer zumindest trifunktionellen Polycarbonsäure in einer Menge von 0,01 - 5 mol% aufgebaut sein kann.

Vorzugsweise ist die Schicht a) aufgebaut aus wenigstens einem thermoplastischen, aliphatischen Polyamid oder Copolyamid, vorzugsweise aus einem Alkylendiamin mit 4-8 C-Atomen und einer aliphatischen Dicarbonsäure mit 6-14 C-Atomen und/oder einem Laktam, vorzugsweise mit 4-6 C-Atomen, besonders vorzugsweise aus einem ε-Caprolaktam (PA-6), oder einem Polyamid aus Hexamethylendiamin und Adipinsäure (PA-6,6), aus einem Hexamethylendiamin und Sebacinsäure, einem Hexamethylendiamin und Dodecandisäure oder einem Copolyamid aus Hexamethylendiamin, Adepinsäure und ε-Caprolaktam, vorzugsweise mit 5-50 Gew.-% ε-Caprolaktam-Einheiten (PA-6,6/6), aus einem teilaromatischen Polyamid aus einem Alkylendiamin mit 4-6 C-Atomen und Terephthalsäure oder Isophthalsäure, vorzugsweise einem Polyamid aus Hexamethylendiamin und Terephthalsäure (PA-6T) oder aus Hexamethylendiamin und Isophthalsäure (PA-6I), aus einem thermoplastischen, aromatischen Polyamid, das aus aromatischen Diaminen und aromatischen Dicarbonsäuren, vorzugsweise aus Isophthalsäure oder Terephthalsäure und Phenylendiamin aufgebaut ist, wobei die Erweichungstemperatur des jeweiligen Polyamids oder Copolyamids ≤ 240 °C sein muss.

Mischungen aus PA-6 oder PA-6,6 und jeweils vorzugsweise 5-20 Gew.-%, bezogen auf die Gesamtmischung, eines teilaromatischen Polyamids, vorzugsweise eines PA-6I zeichnen sich durch eine insbesondere verbesserte Thermoformbarkeit aus. Gegebenenfalls können die Polyamide oder Copolyamide oder deren Mischungen jeweils die vorstehend aufgeführten funktionellen Gruppen aufweisen, sofern mindestens trifunktionale Ausgangsverbindungen bei der Polykondensation mitverwendet werden.

Wie bereits ausgeführt, basiert die Schicht b) auf einem **thermoplastischen** Tetrafluorethylencopolymeren.

Geeignete Fluorcopolymere sind insbesondere Tetrafluorethylencopolymere, die
a) copolymerisierten Einheiten von Tetrafluorethylen,
δ) copolymerisierten Einheiten von mindestens einem von Tetrafluorethylen unterschiedlichen fluorierten Monomeren, ausgewählt aus der Gruppe bestehend aus

   CF₂=CFOR¹

   , wobei R1 für einen C₁₋₁₀ Perfluoralkylrest steht, welcher ein Sauerstoffatom enthalten kann,
   von CF₂= CF(CF₂)pOCF= CF₂, wobei p für 1 oder 2 steht,
   von Perfluor (2-methylen-4-methyl-1,3-(dioxolan) und

   CH₂=CX³(CF₂)_{Q}X⁴

   [wobei X³ für Wasserstoffatom oder ein Fluoratom steht, Q für eine ganze Zahl von 2 bis 10 und X⁴ ein Wasserstoffatom oder ein Fluoratom besteht,
β) copolymerisierten Einheiten von nicht fluorierten Monomeren, vorzugsweise C₂-C₄ Olefinen, bevorzugt von Ethylen oder Propylen oder von Vinylester oder Vinylether, vorzugsweise Vinylacetat und
γ) von copolymerisierten Einheiten einfach ungesättigter, aliphatischer Dicarbonsäure oder deren cyclischen Anhydriden,
   aufweisen,
   wobei ein erfindungsgemäß zum Einsatz kommendes Tetrafluorethylencopolymer, nicht aus allen genannten, copolymerisierten Einheiten α) - γ) aufgebaut sein muss.

Die funktionellen Gruppen des
Tetrafluorethylencopolymeren leiten sich bevorzugt von polymerisierten Einheiten von γ) einfach ungesättigten, aliphatischen Dicarbonsäuren, wie Itaconsäure, Citraconsäure, Maleinsäure, oder deren cyclische Anhydride, wie Maleinsäureanhydrid, Itaconsäureanhydrid oder Citraconsäureanhydrid ab. Vorzugsweise liegt der Anteil dieser polymerisierten Einheiten bei 0,01 - 5 mol%, wobei die Summe sämtlicher polymerisierten Einheiten immer 100 mol% ergeben muss.

So ist eine Schicht b) aus einem
Tetrafluorethylencopolymeren, das aus polymerisierten Einheiten von α) Tetrafluorethylen, β) von C1-C4-Olefinen, vorzugsweise Ethylen, und γ) von einfach ungesättigten Polycarbonsäuren oder von deren cyclischen Anhydriden, vorzugsweise von Itaconsäure, Itaconsäureanhydrid, Citraconsäure, Citraconsäureanhydrid, Maleinsäure oder Maleinsäureanhydrid, aufgebaut ist, wobei das Tetrafluorcopolymere aus 50-90 mol% α-Einheiten, aus 10-50 mol% β)-Einheiten, vorzugsweise Ethylen-Einheiten, und aus 0,01-5 mol% γ)-Einheiten aufgebaut ist, wobei die Summe der Einheiten α) + β) + γ) immer 100 mol% ergeben muss, aufgebaut.

Ebenso bevorzugt für den Aufbau der Schicht b) ist ein Tetrafluorethylencopolymer aus polymerisierten Einheiten α), γ) und δ), wobei das Copolymere aus 50 bis 99,8 mol% α)-Einheiten, 0,01-5 mol% γ)-Einheiten und 0,1-49,99 mol% δ)-Einheiten, jeweils bezogen auf α), γ) und δ), aufgebaut ist.

Ein weiteres bevorzugtes Tetrafluorethylencopolymeres für den Aufbau der Schicht b) ist ein Tetrafluorethylencopolymeres aus polymeriserten Einheiten α), β), γ) und δ), wobei das Copolymere aus 50-90 mol% α)-Einheiten, 5-35 mol% β)-Einheiten, 0,1-20 mol% δ)-Einheiten und 0,01-5 mol% γ)-Einheiten, jeweils bezogen auf α) - δ), aufgebaut ist

Darüber hinaus ist es auch möglich, das Tetrafluorethylencopolymer mit funktionellen Gruppen auszustatten, indem man die Oberfläche der Schicht b) vor der Verbindung mit der Schicht a) durch chemische Behandlung, Corona-Entladungsbehandlung oder Plasma-Entladungsbehandlung radikalisiert und darauf in üblicher Weise, ungesättigte Dicarbonsäuren, deren cyclische Anhydride und/oder Epoxide, Hydroxylgruppen aufpfropft, so dass der Anteil der funktionellen Gruppen 0,01 - 5 mol%, bezogen auf 100 mol% des Tetrafluorethylencopolymeren ausmacht.

Wie bereits erwähnt, ist der erfindungsgemäß verwendete Kunststofffilm vorzugsweise zweischichtig und weist keine Haftvermittlerschicht auf. Sofern daher sowohl die Schicht a) als auch die Schicht b) funktionelle Gruppen aufweist, so ist es empfehlenswert, dass jeweils solche funktionelle Gruppen vorliegen, die miteinander reagieren können. Dies sind z.B. Carboxylgruppen, Hydroxylgruppen, cyclische Anhydridgruppen oder Aminogruppen.

Auf die Thermoverformbarkeit und die Stabilität des erfindungsgemäß zum Einsatz kommenden Kunststofffilms hat die Gesamtdicke bzw. das Dickenverhältnis der Schicht a) zur Schicht b) Einfluss. Die Gesamtdicke des nicht thermogeformten Kunststofffilms beträgt vorzugsweise mindestens 250 µm, besonders bevorzugt mindestens 400 bis zu 700 wobei das Dickenverhältnis der Schicht a) zur Schicht b) im Bereich von 95:5 bis 70:30 liegt.

Der erfindungsgemäß zum Einsatz kommende Kunststofffilm kann durch Extrusion, vorzugsweise durch Coextrusion hergestellt werden. Besonders bevorzugt wird der erfindungsgemäß zum Einsatz kommende Kunststofffilm durch eine Extrusion, vorzugsweise Coextrusion, durch Flachdüsen als Castfilm hergestellt, wobei eine hervorragende Verbundhaftung erhalten wird.

Aufgrund der Polyamid-Schicht a) ist der erfindungsgemäß zum Einsatz kommende Kunststofffilm hygroskopisch und wird vorzugsweise nach Trocknung in einer feuchtigkeitsundurchlässigen Verpackung aufbewahrt und vor der Thermoverformung vorzugsweise nochmals vorgetrocknet. Darüber hinaus wird die erfindungsgemäße Form unmittelbar nach Herstellung und Abkühlung ebenfalls unter Ausschluss von Feuchtigkeit gelagert und ggf. vor dem Einsatz zur Herstellung eines Faserverbundkunststoff-Bauteils nochmals getrocknet.

Durch den Anteil der nicht fluorierten Einheiten des Tetrafluorethylencopolymeren wird erreicht, dass die Erweichungstemperatur des erfindungsgemäß zum Einsatz kommenden Kunststofffilms eine Erweichungstemperatur ≤ 240 °C aufweist.

Dadurch gelingt es, den Kunststofffilm auf konventionellen Verformungsmaschinen, vorzugsweise durch Tiefziehen unter Wärmeeinwirkung bis zur Umformtemperatur zu der erfindungsgemäßen Form zu verformen, wobei das Tiefziehwerkzeug die entsprechende Gestaltung des der erfindungsgemäßen Form herzustellenden Faserverbundkunststoff-Bauteil aufweist. Vorzugsweise liegt die Temperatur zur Thermoverformung des Kunststofffilms bei ≤ 240 °C, besonders bevorzugt im Bereich von 210-240 °C.

Bei dem Tiefziehvorgang kann die Verformung unter Vakuum und ggf. unter mechanischer Einwirkung mit z.B. einem Stempel erfolgen.

Da der erfindungsgemäß zum Einsatz kommende Kunststofffilm vorzugsweise transparent ist, gelingt es auch, transparente Formen für die Herstellung von Faserverbundkunststoff-Bauteilen zur Verfügung zu stellen. Dadurch ist eine Inspektion bei Aushärtung der Faser-Kunststoff getränkten Laminate auf fehlerfreie Gestaltung möglich.

Um bei der Thermoformgebung eine Versprödung der Form zu vermeiden, ist es vorteilhaft, das Polyamid mit Antioxidantien, wie z.B. sterisch gehinderten Phenolen, Phosphiten oder sterisch gehinderten Aminen, auszurüsten. Dadurch erfolgt eine thermisch, antioxidative Langzeitstabilisierung, d.h. eine Verhinderung des Abbaus der Polymeren durch Hitze, die zu einer Versprödung der Form während der Aushärtung des Faserverbundkunststoff-Bauteils führen kann. Eine Hitzestabilisierung kann auch durch Zugabe von Cu(II)-Verbindungen, wie Cu(II)KJ-Komplexen erzielt werden. Eine ausreichende Stabilisierung gegen Versprödung und ggf. unerwünschte Verfärbung der Form kann bereits durch Zugabe durch 1-10 Gew.-%, vorzugsweise 1-5 Gew.-%, der genannten Additive erreicht werden. Die Thermoformbarkeit der erfindungsgemäßen Verbundfolie kann noch zusätzlich verbessert werden, indem eine der vorstehend erwähnten Mischungen aus Polyamiden umfassend ein hochviskoses, amorphes Polyamid, wie PA-6I, zur Herstellung der Polyamidschicht a) mitverwendet wird.
Dadurch kann eine ggf. während des Thermoformens auftretende unerwünschte Erweichung bzw. Zerstörung der Folienbahn verhindert werden.

Darüber hinaus können im erfindungsgemäß zum Einsatz kommenden Kunststofffilm übliche Prozesshilfsmittel, wie Gleitmittel, Antistatika, in üblichen Mengen zugesetzt werden.

Besonders bevorzugt beträgt die Gesamtdicke des thermoplastischen, noch nicht thermogeformten Kunststofffilms mindestens 250 vorzugsweise bis 700 wobei das Dickenverhältnis der Schicht a) und zu der Schicht b) in einem Bereich von 95:5 bis 70:30 liegt.

Bei der Herstellung von großflächigen Faserverbundkunststoff-Formteilen ggf. mit wiederkehrender Gestaltung ist es auch möglich, solche Formen durch eine Aneinanderreihung von identisch gestalteten Formsegmenten, die im überlappenden Bereich zweier Segmente, vorzugsweise durch Heißversiegelung, miteinander verbunden werden können.

Die erfindungsgemäße Form weist mindestens eine Evakuierungsvorrichtung auf und wird nach dem Befüllen mit dem Kunststoffharz getränkten Faserlaminat mit einer weiteren, vakuumdichten Form, der Verschlussform, zur Gesamtform vakuumdicht verschlossen.

Diese zweite (Verschluss)Form zum vakuumdichten Verschließen der erfindungsgemäßen Form kann vorzugsweise eine von der erfindungsgemäßen Form unterschiedliche Gestaltung aufweisen.

Vorzugsweise hat diese sogenannten Verschlussform die Form einer Platte oder eines formgebenden Werkzeuges, auf der das Kunststoff getränkte Faserlaminat zunächst vor dem vakuumdichten Verschließen mit der erfindungsgemäßen Form aufgebracht wird. Dafür muss diese Verschlussform eine mit Trennmitteln versehene Oberfläche aufweisen und während des ganzen Herstellungsprozesses, insbesondere im evakuierten Zustand der Gesamtform, die ursprüngliche Biegefestigkeit beibehalten, damit die Gestalt der erfindungsgemäßen Form und damit das herzustellende Verbund-Bauteil nicht beeinträchtigt wird. Sofern die Biegesteifigkeit der Verschlussform nicht ausreicht, besteht nämlich die Gefahr, dass das Faserverbundkunststoff-Formteil nicht die gewünschte Gestaltung aufweist.

Es ist aber auch möglich, wenn das Faserverbundkunststoff-Bauteil auf seinen beiden Oberflächen eine unterschiedliche Gestaltung aufweisen soll, die Verschlussform ebenso aus einem erfindungsgemäß zum Einsatz kommenden Kunststofffilm mit der der zweiten Oberflächengestaltung angepassten Form zu verwenden. Ebenso ist es möglich, den erfindungsgemäßen Kunststofffilm zwischen dem formgebenden Werkzeug und dem Laminat einzubringen, z.B. um auf den Einsatz konventioneller Trennmittel (lösemittelhaltige bzw. wasserbasierte Releasemittel) beim Entformen verzichten zu können. Selbstverständlich kann, wenn dies notwendig ist, die Verschlussform auch insgesamt eine konkave oder konvexe Form aufweisen, wenn dies für die Gestaltung des Faserverbundkunststoff-Bauteils notwendig ist. Eine Formgebung durch Zusammenklappen oder Falten von entsprechenden Formhälften ist möglich.

Bei der Herstellung des Faserverbundkunststoff-Bauteils wird, wie bereits ausgeführt, das mit dem auszuhärtenden Kunststoffharz, vorzugsweise einem auszuhärtenden Epoxidharz, getränkte Faserlaminat auf der Verschlussform bereit gestellt und anschließend die erfindungsgemäße Form mit der Verschlussform zur Gesamtform zusammengefügt und vakuumdicht verschlossen. Durch Anlegen eines Vakuums wird die erfindungsgemäße Form unter Verdichtung des Fasermaterials zusammengepresst. Unter Beibehaltung des Vakuums wird die Gesamtform mit dem verformten Laminat in einem Autoklaven unter Erhitzen auf die Aushärtungstemperatur des auszuhärtenden Kunststoffharzes gebracht und für die gesamte Aushärtungszeit, meist über Stunden, aufrecht erhalten.
Neben dem Verfahren mit einem Autoklaven kann auch mit Pressdruck oder nur unter Atmosphärendruck gearbeitet werden (d.h. Härtung im Ofen). Desweiteren kann die Härtung auch mittels Einwirkung von Mikrowellenstrahlung erreicht werden. Nach der Aushärtungszeit und dem Abkühlen wird das Faserverbundkunststoff-Bauteil der Gesamtform entnommen und möglichst unter Ausschluss von Feuchtigkeitseinwirkung bis zur Endanwendung verpackt.

Als Fasern werden vorzugsweise Carbonfasern oder Glasfasern für die Herstellung der Verbund-Bauteile eingesetzt.

Mit Hilfe der erfindungsgemäßen Form können Faserverbundkunststoff-Bauteile, bevorzugt Carbonfaserverbundkunststoff-Bauteile, hergestellt werden, die insbesondere als Bauteile für Transportmittel jeder Art, vorzugsweise für Flugzeuge, Raumfahrzeuge, Züge oder Kraftfahrzeuge, oder als Bauteile für Windräder, vorzugsweise als Rotorflügel, eingesetzt werden können.

### Bestimmung der Verbundhaftung

Zur Bestimmung der Verbundhaftung zwischen der Schicht (a) und der Schicht (b) werden Teststreifen einer erfindungsgemäß zum Einsatz kommenden Mehrschichtfolie mit jeweils einer Breite von 15 mm und einer Länge von ca. 150 mm getestet. Jeweils ein Teststreifen wird in einer Zugprüfungsmaschine so befestigt, dass die voneinander zu trennenden Schichten (Schicht (a) von Schicht (b)) einen Winkel von ca. 180 °C bilden, um anschließend voneinander getrennt zu werden. Über die Messtrecke wird die maximale und mittlere Kraft zur Trennung bestimmt. Als Messgerät für die Prüfung wird eine rechnergesteuerte Zugprüfungsmaschine verwendet. Zur Ermittlung der Verbundhaftung wird dabei ein Kraft-Wegdiagramm aufgezeichnet. Die in N gemessene Kraft entspricht der Kraft, die benötigt wird, um die voneinander zu trennenden Schichten (Schicht (a) von Schicht (b)) des Teststreifens bis zur vollständigen Trennung zu trennen.

### Beispiel

Durch Coextrusion von PA-6 enthaltend 5 Gew.-% PA-6I als Schicht a) und einem Ethylen/Tetrafluorethylen-Copolymeren mit 0,5 mol% einpolymerisierten γ- und ϑ-Einheiten wurde ein zweischichtiger Cast-Film hergestellt. Die Dicke der Polyamid schicht a) beträgt 400 µm und die Dicke der Trennschicht b) 100 µm. Der coextrudierte Film konnte bei 229 °C sehr gut thermogeformt werden und hat eine ausgezeichnete Verbundhaftung, da er beim Versuch gemäß vorstehend angegebener "Bestimmung der Verbundhaftung" weder mechanisch noch mit Hilfe von Testklebebändern in 2 Schichten getrennt werden konnte. Eine Delaminierung war nicht möglich.

## Patentansprüche

1. Eine evakuierbare, stabile Form mit einer durch Thermoverformung bei Temperaturen ≤ 240 °C erhaltenen und einer dem jeweils damit herzustellenden Faserverbundkunststoff-Bauteil entsprechenden Gestaltung aus einem wenigstens 2-schichtigen, thermoplastischen, vakuumdichten Kunststofffilm umfassend
a) eine Oberflächenschicht aus wenigstens einem thermoplastischen Polyamid oder Copolyamid, das ggf. funktionelle Gruppen aufweist, und
b) eine die Innenseite der Form bildende Trennschicht aus wenigstens einem thermoplastischen Tetrafluorethylencopolymeren, das funktionelle Gruppen aufweist, aufgebaut aus
b1)
α) copolymerisierten Einheiten von Tetrafluorethylen und
γ) copolymerisierten Einheiten einfach ungesättigter, aliphatischer Dicarbonsäuren oder deren cyclischen Anhydriden sowie
δ) copolymerisierten Einheiten von mindestens einem von Tetrafluorethylen unterschiedlichen fluorierten Monomeren, ausgewählt aus der Gruppe bestehend aus
CF₂=CFOR¹
, wobei R1 für einen C1-10 Perfluoralkylrest steht, welcher ein Sauerstoffatom enthalten kann,
von CF₂ = CF(CF₂)pOCF= CF₂, wobei p für 1 oder 2 steht,
von Perfluor (2-methylen-4-methyl-1,3 dioxolan und CH₂=CX³(CF₂)_{Q}X⁴ wobei X³ für Wasserstoffatom oder ein Fluoratom steht, Q für eine ganze Zahl von 2 bis 10 und X⁴ ein Wasserstoffatom oder ein Fluoratom besteht, und/oder
β) copolymerisierten Einheiten von C₂ -C₄ Olefinen, oder
b2) einem Olefin/Tetrafluorethylencopolymeren, das durch radikalische Pfropfung von 0,01-5 mol% Carboxyl-, Hydroxyl-, Ester-, Isocyanat-, Epoxy-, Amid- oder cyclischen AnhydridGruppen modifiziert ist,
wobei der Kunststofffilm keine Haftvermittlerschicht zwischen den Schichten a) und b) aufweist.

2. Eine Form nach Anspruch 1, **dadurch gekennzeichnet, dass** die Schicht a) aus wenigstens einem thermoplastischen aliphatischen, teilaromatischen oder aromatischen Polyamid oder Copolyamid oder einer Mischung aus wenigstens 2 der genannten Polyamide, vorzugsweise aus PA-6, PA-6,6 oder PA-6,12, einem Copolyamid aus Hexamethylendiamin, Adipinsäure und ε-Caprolactam, oder einer Mischung aus PA-6 oder PA-6,6 und 5-20 Gew.-% eines teilaromatischen Polyamids, vorzugsweise eines PA-6I, mit einer Erweichungstemperatur ≤ 240° C basiert, wobei gegebenenfalls das Polyamid oder Copolyamid-Einheiten aus einem zumindest trifunktionellen Polyamin oder einer zumindest trifunktionellen Polycarbonsäure in einer Menge von 0,01-5 mol%, bezogen auf 100 mol% des Copolyamids, aufgebaut ist.

3. Eine Form nach einem der Ansprüche 1 oder 2, **dadurch gekennzeichnet, dass** die Schicht b) aus einem Tetrafluorethylencopolymeren aus polymerisierten Einheiten von a) Tetrafluorethylen, β) von C2 -C4-Olefinen, vorzugsweise Ethylen, und γ) von einfach ungesättigten Polycarbonsäuren oder von deren cyclischen Anhydriden, vorzugsweise von Itaconsäure, Itaconsäureanhydrid, Citraconsäure, Citraconsäureanhydrid, Maleinsäure oder Maleinsäureanhydrid, aufgebaut ist, wobei das Tetrafluorcopolymere aus 50-90 mol% α)-Einheiten, aus 10-50 mol% β)-Einheiten, vorzugsweise Ethylen-Einheiten, und gegebenenfalls aus 0,01-5 mol% γ)-Einheiten aufgebaut ist, wobei die Summe der Einheiten α) + β) bzw. α) + β) + γ) immer 100 mol% ergeben muss.

4. Eine Form nach einem der Ansprüche 1 oder 2, **dadurch gekennzeichnet, dass** die Schicht b) aus einem Ethylen/Tetrafluorethylencopolymeren aufgebaut ist, das durch radikalische Pfropfung von mindestens 0,01-5 mol% Carboxyl-, Hydroxyl-, Ester-, Isocyanat-, Epoxy-, Amid- oder Maleinsäureanhydrid-Gruppen, modifiziert ist.

5. Eine Form nach einem der Ansprüche 1 oder 2, **dadurch gekennzeichnet, dass** die Schicht b) aus einem thermoplastischen Tetraflurethylencopolymeren aus
α) copolymerisierten Einheiten von Tetrafluorethylen,
δ) copolymerisierten Einheiten von mindestens einem von Tetrafluorethylen unterschiedlichen fluorierten Monomeren, ausgewählt aus der Gruppe bestehend aus
CF₂=CFOR¹
, wobei R1 für einen C₁₋₁₀ Perfluoralkylrest steht, welcher ein Sauerstoffatom enthalten kann,
von CF₂= CF(CF₂)pOCF= CF₂, wobei p für 1 oder 2 steht,
von Perfluor (2-methylen-4-methyl-1,3 dioxolan und
CH₂=CX³(CF₂)_{Q}X⁴
, wobei X³ für Wasserstoffatom oder ein Fluoratom steht, Q für eine ganze Zahl von 2 bis 10 und X⁴ ein Wasserstoffatom oder ein Fluoratom steht,
β) copolymerisierten Einheiten von nicht fluorierten Monomeren, vorzugsweise C₂-C₄ Olefinen und
γ) von copolymerisierten Einheiten einfach ungesättigter, aliphatischer Dicarbonsäure oder deren cyclischen Anhydriden,
aufgebaut i ist.

6. Eine Form nach Anspruch **5**, **dadurch gekennzeichnet, dass** die Schicht b) aus einem Tetrafluorethylencopolymer aus polymerisierten Einheiten α), γ) und δ) besteht, wobei das Copolymere 50 bis 99,8 mol% α)-Einheiten, 0,01-5 mol% γ)-Einheiten und 0,1-49,99 mol% δ)-Einheiten, jeweils bezogen auf α), γ) und δ), aufweist.

7. Eine Form nach Anspruch 5, **dadurch gekennzeichnet, dass** das Copolymere aus 50-90 mol% α)-Einheiten, 5-35 mol% β)-Einheiten, 0,1-20 mol% δ)-Einheiten und 0,01-5 mol% γ)-Einheiten, jeweils bezogen auf α) - δ), aufgebaut ist

8. Eine Form nach einem der Ansprüche 1-7, **dadurch gekennzeichnet, dass** die Form mindestens eine verschließbare Evakuierungseinrichtung aufweist.

9. Verwendung einer Form nach einem der Ansprüche 1 - 8, zur Herstellung eines Faserverbundkunststoff-Bauteils.

10. Verwendung einer Form nach Anspruch 9, **dadurch gekennzeichnet, dass** die aus dem thermoplastischen Kunststofffilm hergestellte Form eine um mindestens 10°C höhere Erweichungstemperatur als die Aushärtungstemperatur des in der Form ausgehärteten Faserverbundkunststoff-Bauteils aufweist.

11. Verwendung nach Anspruch 10, **dadurch gekennzeichnet, dass** das Faserverbundkunststoff-Bauteil ein Carbonfaserverbundkunststoff-Bauteil, vorzugsweise ein Bauteil für ein Transportmittel jeder Art, vorzugsweise für Flugzeuge, Raumfahrzeuge, Züge oder Kraftfahrzeuge, oder ein Bauteil für Windräder, vorzugsweise für Rotorflügel, ist.

## Claims

1. Stable evacuable mold with a shape obtained by thermoforming at temperatures ≤ 240°C and corresponding to the respective fiber-composite plastics component to be produced therewith, and made of an at least two-layer vacuum-tight thermoplastic film comprising
a) a surface layer made of at least one thermoplastic polyamide or copolyamide which optionally has functional groups, and
b) a release layer forming the internal side of the mold and made of at least one thermoplastic tetrafluoroethylene copolymer, which has functional groups, composed of
b1)
α) copolymerized units of tetrafluoroethylene and
γ) copolymerized units of monounsaturated aliphatic dicarboxylic acids or cyclic anhydrides thereof, and also
δ) copolymerized units of at least one fluorinated monomer differing from tetrafluoroethylene, selected from the group consisting of
CF₂=CFOR¹
, where R¹ is a C₁₋₁₀ perfluoroalkyl moiety which can comprise an oxygen atom,
of CF₂=CF(CF₂)pOCF=CF₂, where p is 1 or 2,
of perfluoro (2-methylene-4-methyl-1,3 dioxolane and
CH₂=CX³(CF₂)_{Q}X⁴
, where X³ is a hydrogen atom or a fluorine atom, Q is an integer from 2 to 10 and X⁴ is a hydrogen atom or a fluorine atom, and/or
β) copolymerized units of C₂-C₄ olefins, or
b2) an olefin/tetrafluoroethylene copolymer which has been modified by free-radical grafting of from 0.01 to 5 mol% of carboxy groups, hydroxy groups, ester groups, isocyanate groups, epoxy groups, amide groups or cyclic anhydride groups,
where the plastics film has no tie layer between the layers a) and b).

2. Mold according to Claim 1, **characterized in that** the layer a) is based on at least one thermoplastic aliphatic, semiaromatic or aromatic polyamide or copolyamide or of a mixture of at least two of the polyamides mentioned, preferably of PA-6, PA-6,6 or PA-6,12, a copolyamide of hexamethylenediamine, adipic acid and ε-caprolactam, or a mixture of PA-6 or PA-6,6 and from 5 to 20% by weight of a semiaromatic polyamide, preferably a PA-6I, with softening point ≤ 240°C, where the polyamide or copolyamide units is composed of an at least trifunctional polyamine or of an at least trifunctional polycarboxylic acid in a quantity of from 0.01 to 5 mol%, based on 100 mol% of the copolyamide.

3. Mold according to Claim 1 or 2, **characterized in that** the layer b) is composed of a tetrafluoroethylene copolymer made of polymerized units of α) tetrafluoroethylene, β) C2-C4-olefins, preferably ethylene, and γ) monounsaturated polycarboxylic acids or cyclic anhydrides thereof, preferably itaconic acid, itaconic anhydride, citraconic acid, citraconic anhydride, maleic acid or maleic anhydride, where the tetrafluorocopolymer is composed of from 50 to 90 mol% of α)-units, of from 10 to 50 mol% of β)-units, preferably ethylene units, and optionally of from 0.01 to 5 mol% of γ)-units, where the entirety of the units α) + β) or α) + β) + γ) must always give 100 mol%.

4. Mold according to Claim 1 or 2, **characterized in that** the layer b) is composed of an ethylene/tetrafluoroethylene copolymer which has been modified by free-radical grafting of at least from 0.01 to 5 mol% of carboxy groups, hydroxy groups, ester groups, isocyanate groups, epoxy groups, amide groups or maleic anhydride groups.

5. Mold according to Claim 1 or 2, **characterized in that** the layer b) is composed of a thermoplastic tetrafluoroethylene copolymer made of
α) copolymerized units of tetrafluoroethylene,
δ) copolymerized units of at least one fluorinated monomer differing from tetrafluoroethylene, selected from the group consisting of
CF₂=CFOR¹
, where R1 is a C₁₋₁₀ perfluoroalkyl moiety which can comprise an oxygen atom,
of CF₂=CF(CF₂)pOCF=CF₂, where p is 1 or 2,
of perfluoro(2-methylene-4-methyl-1,3 dioxolane and
CH₂=CX³(CF₂)_{Q}X⁴,
where X³ is a hydrogen atom or a fluorine atom, Q is an integer from 2 to 10 and X⁴ is a hydrogen atom or a fluorine atom,
β) copolymerized units of non-fluoruiated monomers, preferably C₂-C₄ olefins and
γ) copolymerized units of monounsaturated aliphatic dicarboxylic acid or cyclic anhydrides thereof.

6. Mold according to Claim 5, **characterized in that** the layer b) is composed of a tetrafluoroethylene copolymer made of polymerized units α), γ) and δ), where the copolymer has from 50 to 99.8 mol% of α)-units, from 0.01 to 5 mol% of y)-units and from 0.1 to 49.99 mol% of δ)-units, based in each case on α), γ) and δ).

7. Mold according to Claim 5, **characterized in that** the copolymer is composed of from 50 to 90 mol% of α)-units, from 5 to 35 mol% of β)-units, from 0.1 to 20 mol% of δ)-units and from 0.01 to 5 mol% of γ)-units, based in each case on α)-δ).

8. Mold according to any of Claims 1-7, **characterized in that** the mold has at least one sealable evacuation system.

9. Use of a mold according to any of Claims 1-8, for the production of a fiber-composite plastics component.

10. Use of a mold according to Claim 9, **characterized in that** the mold produced from the thermoplastic film has a softening point that is higher by at least 10°C than the hardening temperature of the fiber-composite plastics component hardened in the mold.

11. Use according to Claim 10, **characterized in that** the fiber-composite plastics component is a carbon-fiber-composite plastics component, preferably a component for a means of transport of any type, preferably for aircraft, spacecraft, trains or motor vehicles, or a component for wind turbines, preferably for rotor blades.

## Revendications

1. Moule stable évacuable ayant une forme obtenue par thermoformage à des températures ≤ 240 °C et correspondant au composant en matière plastique composite renforcée par des fibres à fabriquer au moyen de celui-ci, constitué par un film en matière plastique au moins bicouche, thermoplastique, étanche au vide, comprenant :
a) une couche de surface en au moins un polyamide ou copolyamide thermoplastique, qui comprend éventuellement des groupes fonctionnels, et
b) une couche de séparation formant le côté intérieur du moule en au moins un copolymère de tétrafluoroéthylène thermoplastique, qui comprend des groupes fonctionnels, formé par :
b1)
α) des unités copolymérisées de tétrafluoroéthylène et
γ) des unités copolymérisées d'acides dicarboxyliques aliphatiques monoinsaturés ou leurs anhydrides cycliques, ainsi que
δ) des unités copolymérisées d'au moins un monomère fluoré différent du tétrafluoroéthylène, choisi dans le groupe constitué par :
CF₂=CFOR¹
, R¹ représentant un radical perfluoroalkyle en C₁₋₁₀, qui peut contenir un atome d'oxygène,
CF₂=CF(CF₂)ₚOCF=CF₂
, p représentant 1 ou 2, perfluoro-(2-méthylène-4-méthyl-1,3-dioxolane) et
CH₂=CX³(CF₂)_{Q}X⁴
, X³ représentant un atome d'hydrogène ou un atome de fluor, Q représentant un nombre entier de 2 à 10, et X⁴ représentant un atome d'hydrogène ou un atome de fluor, et/ou
β) des unités copolymérisées d'oléfines en C₂-C₄, ou
b2) un copolymère d'oléfine/tétrafluoroéthylène, qui est modifié par greffage radicalaire de 0,01 à 5 % en moles de groupes carboxyle, hydroxyle, ester, isocyanate, époxy, amide ou anhydride cyclique,
le film en matière plastique ne comprenant pas de couche de promoteur d'adhésion entre les couches a) et b) .

2. Moule selon la revendication 1, **caractérisé en ce que** la couche a) est à base d'au moins un polyamide ou copolyamide thermoplastique aliphatique, partiellement aromatique ou aromatique, ou d'un mélange d'au moins 2 des polyamides mentionnés, de préférence de PA-6, de PA-6,6 ou de PA-6,12, d'un copolyamide d'hexaméthylène-diamine, d'acide adipique et d'ε-caprolactame, ou d'un mélange de PA-6 ou de PA-6,6 et de 5 à 20 % en poids d'un polyamide partiellement aromatique, de préférence d'un PA-6I, ayant une température de ramollissement ≤ 240 °C, l'unité polyamide ou copolyamide étant éventuellement formée par une polyamine au moins trifonctionnelle ou un acide polycarboxylique au moins trifonctionnel en une quantité de 0,01 à 5 % en moles, par rapport à 100 % en moles du copolyamide.

3. Moule selon l'une quelconque des revendications 1 et 2, **caractérisé en ce que** la couche b) est formée par un copolymère de tétrafluoroéthylène constitué par des unités polymérisées α) de tétrafluoroéthylène, β) d'oléfines en C₂-C₄, de préférence d'éthylène, et γ) d'acides polycarboxyliques monoinsaturés ou de leurs anhydrides cycliques, de préférence d'acide itaconique, d'anhydride de l'acide itaconique, d'acide citraconique, d'anhydride de l'acide citraconique, d'acide maléique ou d'anhydride de l'acide maléique, le copolymère tétrafluoré étant formé par 50 à 90 % en moles d'unités α), 10 à 50 % en moles d'unités β), de préférence d'unités éthylène, et éventuellement 0,01 à 5 % en moles d'unités γ), la somme des unités α) + β) ou α) + β) + γ) devant toujours être de 100 % en moles.

4. Moule selon l'une quelconque des revendications 1 et 2, **caractérisé en ce que** la couche b) est formée par un copolymère d'éthylène/tétrafluoroéthylène, qui est modifié par greffage radicalaire d'au moins 0,01 à 5 % en moles de groupes carboxyle, hydroxyle, ester, isocyanate, époxy, amide ou anhydride de l'acide maléique.

5. Moule selon l'une quelconque des revendications 1 et 2, **caractérisé en ce que** la couche b) est formée par un copolymère de tétrafluoroéthylène thermoplastique constitué par :
α) des unités copolymérisées de tétrafluoroéthylène,
δ) des unités copolymérisées d'au moins un monomère fluoré différent du tétrafluoroéthylène, choisi dans le groupe constitué par :
CF₂=CFOR¹
, R1 représentant un radical perfluoroalkyle en C₁₋₁₀, qui peut contenir un atome d'oxygène,
CF₂=CF(CF₂)ₚOCF=CF₂
, p représentant 1 ou 2, perfluoro-(2-méthylène-4-méthyl-1,3-dioxolane) et
CH₂=CX³(CF₂)_{Q}X⁴, X³
représentant un atome d'hydrogène ou un atome de fluor, Q représentant un nombre entier de 2 à 10, et X⁴ représentant un atome d'hydrogène ou un atome de fluor,
β) des unités copolymérisées de monomères non fluorés, de préférence d'oléfines en C₂-C₄, et
γ) des unités copolymérisées d'un acide dicarboxylique aliphatique monoinsaturé ou ses anhydrides cycliques.

6. Moule selon la revendication 5, **caractérisé en ce que** la couche b) est constituée par un copolymère de tétrafluoroéthylène d'unités polymérisées α), γ) et δ), le copolymère comprenant 50 à 99,8 % en moles d'unités α), 0,01 à 5 % en moles d'unités γ) et 0,1 à 49, 99 % en moles d'unités δ), à chaque fois par rapport à α) , γ) et δ).

7. Moule selon la revendication 5, **caractérisé en ce que** le copolymère est formé par 50 à 90 % en moles d'unités α), 5 à 35 % en moles d'unités β), 0,1 à 20 % en moles d'unités δ) et 0,01 à 5 % en moles d'unités γ), à chaque fois par rapport à α) à δ).

8. Moule selon l'une quelconque des revendications 1 à 7, **caractérisé en ce que** le moule comprend au moins un dispositif d'évacuation pouvant être fermé.

9. Utilisation d'un moule selon l'une quelconque des revendications 1 à 8, pour la fabrication d'un composant en matière plastique composite renforcée par des fibres.

10. Utilisation d'un moule selon la revendication 9, **caractérisée en ce que** le moule fabriqué à partir du film en matière plastique thermoplastique présente une température de ramollissement supérieure d'au moins 10 °C à la température de durcissement du composant en matière plastique composite renforcée par des fibres durci dans le moule.

11. Utilisation selon la revendication 10, **caractérisée en ce que** le composant en matière plastique composite renforcée par des fibres est un composant en matière plastique composite renforcée par des fibres de carbone, de préférence un composant pour un moyen de transport de tout type, de préférence pour des aéronefs, des véhicules spatiaux, des trains ou des véhicules automobiles, ou un composant pour des éoliennes, de préférence pour des pales de rotor.
